# EUROPÄISCHE PATENTSCHRIFT

(11) **EP 2 964 509 B1**
(45) Veröffentlichungstag und Bekanntmachung des Hinweises auf die Patenterteilung: **01.02.2017**
(21) Anmeldenummer: 14706022.2
(22) Anmeldetag: 21.02.2014
(51) Int. Cl.: B62D 5/04, F16H 55/24

(54) **WINKELBEWEGLICHE LAGERANORDNUNG FÜR RITZEL IN REDUKTIONSGETRIEBEN ELEKTROMECHANISCHER LENKSYSTEME**
ANGULARLY MOVABLE BEARING ARRANGEMENT FOR PINIONS IN REDUCTION GEARS OF ELECTROMECHANICAL STEERING SYSTEMS
SYSTÈME DE PALIER À MOBILITÉ ANGULAIRE POUR PIGNONS D'ENGRENAGES RÉDUCTEURS DE SYSTÈMES DE DIRECTION ÉLECTROMÉCANIQUES

(30) Priorität: 06.03.2013 DE 102013003749
(43) Veröffentlichungstag der Anmeldung: 13.01.2016
(73) Patentinhaber: ThyssenKrupp Presta Aktiengesellschaft, 9492 Eschen (LI); ThyssenKrupp AG, 45143 Essen (DE)
(72) Erfinder: RIEPOLD, Thomas, CH-9470 Buchs SG (CH)
(74) Vertreter: ThyssenKrupp Intellectual Property GmbH
(86) Internationale Anmeldenummer: PCT/EP2014/053393
(87) Internationale Veröffentlichungsnummer: WO 2014/135382

(56) Entgegenhaltungen:
- EP-A1- 1 452 419
- EP-A1- 1 571 067
- EP-A1- 2 450 262
- DE-A1-102008 040 673
- DE-A1-102008 042 609
- DE-A1-102008 054 441
- DE-A1-102009 002 940
- DE-A1-102009 018 674
- DE-A1-102010 002 285
- JP-A- H0 735 147
- US-A1- 2011 017 542

## Beschreibung

Die vorliegende Erfindung betrifft ein Schraubradgetriebe mit den Merkmalen des Oberbegriffs des Anspruchs 1.

Elektromechanische Lenksysteme von Kraftfahrzeugen weisen zur Verbesserung des Fahrkomforts Hilfskraftlenksysteme auf, welche die von einem Elektromotor erzeugte Hilfskraft auf die Lenksäule bzw. das Lenkritzel einleiten und somit die vom Fahrer aufgebrachte Kraft beim Lenken verstärken. Dabei wird mittels eines Reduktionsgetriebes, das als Schraubrad-, Schnecken- oder Globoidgetriebe ausgebildet sein kann, die Hilfskraft des Elektromotors auf das Lenkritzel übertragen.

Die lenkungsspezifischen Anforderungen erfordern, dass das Reduktionsgetriebe geräuscharm ohne Klappern und Klopfen in Kombination mit geringer Reibung läuft. Dazu wird das Zahnflankenspiel des Reduktionsgetriebes minimiert bzw. aufgehoben.

Aus dem Stand der Technik ist eine Vielzahl von Verfahren zur Minimierung des Zahnflankenspiels bekannt.

Um das Spiel des Verzahnungseingriffs aufzuheben und gleichzeitig eine Radialbewegung des Ritzels zu erlauben, kann zum Beispiel durch Verschiebung des Ritzels radial zum Zahnrad mittels eines oder mehrerer Exzenter das Spiel eingestellt bzw. nachgestellt werden. Ferner existieren Verfahren, bei denen das Ritzel und das Zahnrad elastisch gegeneinander durch geeignete elastische Elemente vorgespannt sind. Diese Verfahren erlauben den Ausgleich von Rundlauftoleranzen von Ritzel und Zahnrad, Wärmeausdehnung und Verschleiß. Dabei wird die Ritzelachse aus ihrer Mittellage geschwenkt wobei die hintere, dem Motor zugewandte Lagerung in sich verkippt. Geht die Verkippung des Lagers über eine von der Lagerbauart und dem Lagerspiel abhängige Grenze hinaus, führt diese zu erhöhter Reibung, starken Schwankungen der Reibung, Geräuschen und einer verringerten Lebensdauer der Lagerung.

Geht man davon aus, dass zur Verminderung von Umlenkklopfen und Klappergeräuschen das Axialspiel der Lager minimiert werden muss, so sind die daraus erforderlichen Lagerbauarten wie zum Beispiel Vierpunktlager, noch empfindlicher gegen Verkippung.

Es ist daher wünschenswert besonders auch bei verringertem Axialspiel des Lagers eine Verkippung des Lagers ohne die o.g. Nachteile zu ermöglichen. Aus dem Stand der Technik sind dazu Anordnungen bekannt, die im Folgenden beschrieben werden.

Die EP 2450262 A1 wird als nächstliegender Stand der Technik angesehen und offenbart eine Lösung für die Vorspannung eines Schneckengetriebes, bei dem die Lagerschalen des Wälzlagers so ausgebildet sind, dass die Wälzkörper in den Lagerschalen eine Winkelbewegung zulassen.

In der Offenlegungsschrift DE 102010002285 A1 erfolgt die Lagerung eines Schraubritzels festlagerseitig durch ein Wälzlager, welches einen kleinen Schwenkwinkel zulässt. Diese Verschwenkung wird ermöglicht durch die Aufnahme der äußeren Lagerschale in einer kalottenförmigen Lageraufnahme.

Weiterhin ist eine Lösung in der DE 102008054441 A1 offenbart, bei der ein konvexer äußerer Lagerring mit einem federnden Ring zusammen wirkt, der elastisch eine Verschwenkung des äußeren Lagerrings gestattet. Die Lageraufnahme ist dabei teilweise konkav ausgebildet.

Die nicht vorveröffentlichte Patentanmeldung DE 102012005931 betrifft ein in axialer Richtung gedämpftes Lager. Das Lager ist in einem Gehäuse aufgenommen, welches einen ballig ausgeführten Vorsprung aufweist, wodurch das Lager eine Pendelbewegung ausführen kann.

Es ist eine Aufgabe der vorliegenden Erfindung, ein Schraubradgetriebe bereitzustellen, welches eine Lageranordnung mit verbesserten Eigenschaften aufweist.

Diese Aufgabe wird von einem Schraubradgetriebe mit den Merkmalen des Anspruchs 1 gelöst.

Danach ist ein Schraubradgetriebe für eine Lenkung eines Kraftfahrzeugs, mit einem Schraubrad und einem in eine Verzahnung des Schraubrades eingreifenden Schraubritzel, mit einem Festlager, welches einen auf einem Lagersitz auf dem Schraubritzel fest angeordneten Lagerinnenring sowie einen Lageraußenring aufweist und welches das Schraubritzel antriebsseitig um eine Längsachse drehbar lagert, wobei das Festlager in einem Gehäuse aufgenommen ist und das Schraubritzel mit dem Festlager um eine quer zu der Längsachse orientierte Schwenkachse gegenüber dem Gehäuse verschwenkbar ist, vorgesehen bei dem zwischen dem Lageraußenring und dem Gehäuse eine Hülse angeordnet ist, wobei die Hülse eine innere Anlagefläche aufweist, die mit einer äußeren Umfangsfläche des Lageraußenrings in Anlage steht, und eine äußere Anlagefläche aufweist, die mit einer Sitzfläche des Gehäuses in Anlage steht, wobei entweder die innere Anlagefläche oder die äußere Anlagefläche konvex und sowohl die Umfangsfläche als auch die Sitzfläche zylindrisch ausgebildet sind. Dabei kann das Schraubradgetriebe als Schnecken- oder Globoidgetriebe ausgebildet sein.

Der Lageraußenring und die Hülse bilden ein winkelbewegliches Gelenk, wodurch das Lager gegenüber dem Gehäuse beweglich gelagert wird.

Eine rein zylindrische Ausbildung der Umfangsfläche und der Sitzfläche ist besonders zu bevorzugen.

Weiter ist es vorteilhaft, wenn die Hülse elastisch ausgebildet ist, so dass eine effektive Durchmesservergrößerung, die durch die Schiefstellung des Lageraußenrings in der Hülse zustande kommt, kompensiert werden kann.

Es ist bevorzugt, dass die konvexe Anlagefläche der Hülse in linienförmiger Anlage mit der Umfangsfläche oder der Sitzfläche steht. Je nach Ausführungsform ist die innenliegende oder die außenliegende Anlagefläche ballig ausgeformt. Entsprechend steht entweder die Umfangsfläche oder die Sitzfläche in linienförmiger Anlage mit der konvexen Anlagefläche. Dabei liegt die linienförmige Anlage bevorzugt auf der Mittelebene des Festlagers.

Weiterhin ist es vorteilhaft, wenn die Schwenkachse das Festlager mittig durchsetzt und somit ebenfalls in der Mittelebene des Festlagers liegt, so dass die auf das Wälzlager wirkende Schwenkung und die daraus resultierenden Momente durch die innen oder außen ballige Gelenkhülse zum größten Teil kompensiert werden können.

Weiterhin ist vorteilhaft vorgesehen, wenn das Schraubritzel bei dem Festlager mit dem Antriebsmotor mittels einer elastischen Kupplung verbunden ist, die die Verschwenkung des Schraubritzels zulässt, ohne dass der Motor mit bewegt wird.

Es ist bevorzugt vorgesehen, dass eine der konvexen Anlagefläche der Hülse gegenüberliegende zylindrische Anlagefläche eine mittige Aussparung aufweist, die dazu vorgesehen ist, ein ringförmiges Vorspannelement aufzunehmen, wobei die Kennlinie des Vorspannelements mit Vorteil progressiv ist.

Weiterhin weist die Hülse in einer bevorzugten Ausführungsform radial durchsetzende Dehnungsschlitze auf.

Vorteilhafterweise sind die Dehnungsschlitze versetzt auf beiden Seiten der Hülse angeordnet und gehen über eine Mittelachse hinaus.

In einer anderen bevorzugten Ausbildung der erfindungsgemäßen Lageranordnung ist die Aussparung auf der zylindrischen Anlagefläche konkav ausgeformt, wobei kein radiales Vorspannelement vorgesehen ist. Dabei wird die radiale Federkennlinie durch die Geometrie der Aussparung bestimmt. In dieser Ausführungsform sind die Dehnungsschlitze ebenfalls versetzt auf beiden Seiten der Hülse angeordnet.

In bevorzugten Ausführungen ist vorgesehen, dass das Festlager axial durch wenigstens ein Axialfederelement gehalten ist, welches einen lagernahen Ring aufweist und das Verkippen des Lagers zulässt. Das schraubritzelnahe Axialfederelement wird dabei von einem Sicherungsring in einer Nut im Gehäuse axial gesichert.

In einer bevorzugten Ausführungsform der Axialfederelemente weisen die jeweils lagernahen Ringe der Axialfederelemente wenigstens eine konvexe Ausformung auf, deren Mitten eine Drehachse definieren, die mit der Schwenkachse des Schraubritzels zusammenfällt. Diese Anordnung reduziert die auf das Lager noch einwirkenden Kippmomente weiter.

Dabei ist es vorteilhaft, wenn das Gehäuse innenseitig eine Nut aufweist, in die jeweils eine Orientierungsnase der lagernahen Ringe zur Orientierung der konvexen Ausformung eingreift. Diese erfindungsgemäße Ausgestaltung vereinfacht die richtige Ausrichtung der konvexen Ausformungen bei der Montage.

Die vorhergehend beschriebenen erfindungsgemäßen Ausbildungen des Schraubradgetriebes werden bevorzugt in einer elektrischen Hilfskraftlenkung für Kraftfahrzeuge eingesetzt.

Bevorzugte Ausführungsformen der Erfindung werden nachfolgend anhand der Zeichnungen näher erläutert. Es zeigen:
- Fig. 1:: eine schematische Darstellung eines Schraubradgetriebes eines Hilfskraftlenksystems,
- Fig. 2:: einen Querschnitt einer erfindungsgemäßen Lageranordnung,
- Fig. 3:: einen Querschnitt einer zweiten erfindungsgemäßen Lageranordnung,
- Fig. 4:: einen Schnitt einer Hülse mit einem Vorspannelement,
- Fig. 5:: einen Schnitt einer zweiten Hülse,
- Fig. 6:: einen Querschnitt einer dritten erfindungsgemäßen Lageranordnung, sowie
- Fig. 7:: einen Schnitt der Hülse aus Fig. 6.

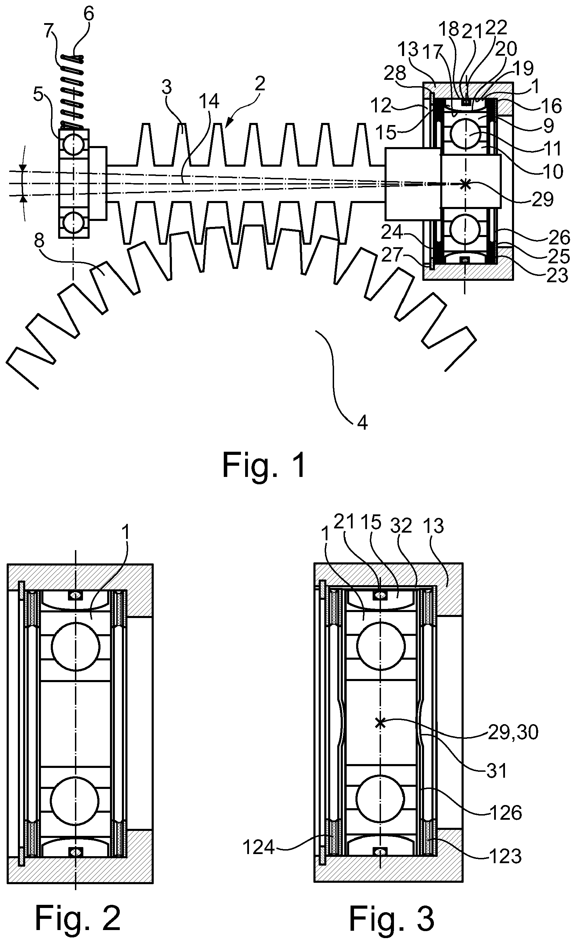

In der Figur 1 ist eine Darstellung eines Hilfskraftlenksystems einer nicht näher dargestellten Lenkeinrichtung mit erfindungsgemäßer Lageranordnung eines Wälzlagers 1 gezeigt. Ein hier nicht dargestellter Elektromotor treibt über eine Kopplung einer Antriebswelle mit einem Schraubradgetriebe 2, bestehend aus einem Schraubritzel 3 und einem Schraubrad 4 eine hier nicht gezeigte Lenksäule an. In der hier gezeigten erfindungsgemäßen Ausführungsform ist das Schraubradgetriebe als Schneckengetriebe ausgeformt. Die Lagerung des Schraubritzels 3 erfolgt festlagerseitig durch das erfindungsgemäße Wälzlager 1. Das andere Ende des Schraubritzels 3 ist in einem Loslager 5 gelagert, welches im Ausführungsbeispiel ebenfalls durch ein Wälzlager realisiert ist. Das Schraubritzel 3 wird über das Loslager 5 durch eine Vorspanneinrichtung 6, die eine Druckfeder 7 aufweist, mit einer bestimmten Kraft in die Verzahnung 8 des Schraubrads 4 gedrückt.

Das festlagerseitige Wälzlager 1, aufweisend einen Lageraußenring 9 und einen Lagerinnenring 10 und eine Vielzahl von Wälzkörpern 11, ist in einer Gehäuseöffnung 12 eines Gehäuses 13 aufgenommen. Diese Gehäuseöffnung 12 ist zylindrisch um eine Drehachse 14 des Schraubritzels 3 ausgeformt, wobei der Radius auf der schraubradgetriebenahen Seite so groß gewählt wurde, dass zwischen dem Lageraußenring 9 des Wälzlagers 1 und dem Gehäuse 13 eine Hülse 15 aufgenommen werden kann. Zur Antriebsseite hin verkleinert sich der Radius der Gehäuseöffnung 12 und bildet eine Gehäuseschulter 16 aus. Eine innere Anlagefläche 17 der aufgenommenen Hülse 15 ist ballig und eine äußere Anlagefläche 18 der Hülse 15 ist zylindrisch ausgeformt. Die Breite der Hülse 15 entspricht in etwa der Breite des Wälzlagers 1. Die Hülse 15 liegt mit der äußeren Anlagefläche 18 an einer Sitzfläche 19 des Gehäuses 13 und mit der inneren Anlagefläche 17 an einer äußeren Umfangsfläche 20 des Lageraußenrings 9 an, wobei die Anlage der balligen Ausformung der Hülse 15 am Lager 1 linienförmig ist. Die zylindrische äußere Anlagefläche 18 weist eine rechteckige Aussparung 21 auf, in die ein ringförmiges elastomeres Vorspannelement 22 aufgenommen ist. Zur axialen Lagerbefestigung sind auf der schraubradgetriebenahen, sowie auf der schraubradgetriebefernen Seite zwischen dem Lageraußenring 9 und der Gehäuseschulter 16 Axialfederelemente 23, 24 vorgesehen. Diese Axialfederelemente 23, 24 bestehen aus Elastomere 25, die jeweils zwischen zwei Ringen 26 angeordnet sind und durch Vulkanisation auf diese aufgebracht wurden. Der Außendurchmesser der Ringe 26 entspricht dabei mit etwas Spiel dem Durchmesser der Gehäuseöffnung 12. Das innenliegende Axialfederelement 23 liegt an der Gehäuseschulter 16 an und das außenliegende Axialfederelement 24 wird von einem in einer Nut 27 im Gehäuse 13 eingebrachten Sicherungsring 28 in seiner Position gehalten. Vorteilhafterweise sind die Axialfederelemente 23, 24 als zwei gegeneinander vorgespannte Elastomerelemente mit einer progressiven Federkennlinie ausgeführt.

Das Schraubritzel 3 ist senkrecht zu der Drehachse 14 schwenkbar in dem Festlager 1 gelagert, wobei die Schwenkachse 29 das Festlager 1 mittig durchsetzt. Dadurch kann das Verzahnungsspiel mittels der Vorspannungseinrichtung 6 während der gesamten Lebensdauer des Getriebes konstant gehalten werden.

Die Schwenkbewegung des Schraubritzels 3 sowie die Vorspannung des Loslagers 5 sind mit Pfeilen angedeutet.

Figur 2 zeigt eine vergrößerte Darstellung der erfindungsgemäßen Lageranordnung des Wälzlagers 1 aus Figur 1.

In Figur 3 ist eine zweite Ausführungsform der Lageranordnung dargestellt. Dabei sind zwei Axialfederelemente 123, 124 so ausgestaltet, dass eine Drehachse 30 definiert wird, die mit der Lage der Schwenkachse 29 übereinstimmt. Dazu weisen zwei wälzlagerseitige Ringe 126 der Axialfederelemente 123, 124 jeweils zwei konvexe Ausformungen 31 zum Wälzlager 1 hin auf. Diese Anordnung reduziert die auf das Wälzlager 1 wirkenden Kippmomente weiter.

Durch eine Nut 32 im Gehäuse 13 und eine hier nicht dargestellte Orientierungsnase der beiden wälzlagerseitigen Ringe 126 wird die richtige Lage der Axialfederelemente 123, 124 bei der Montage sichergestellt.

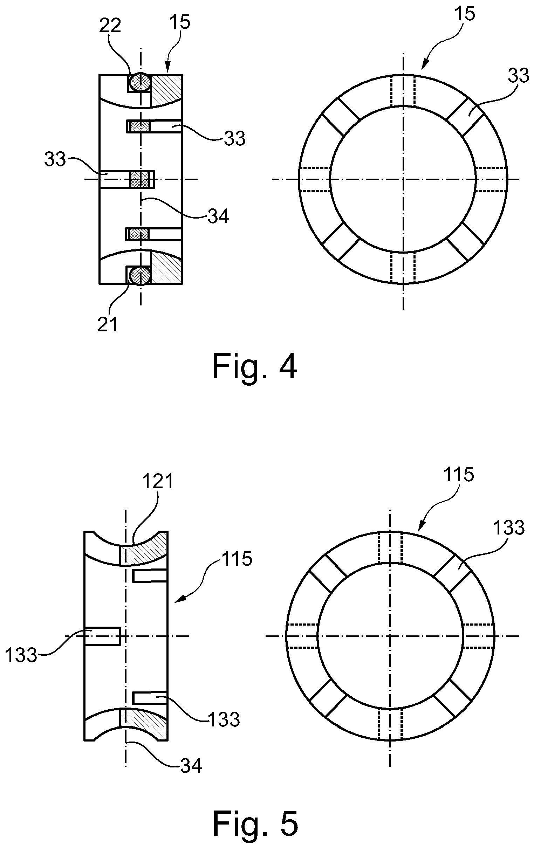

Im Detail wird die Formgebung der Hülse 15 und das Zusammenspiel der Hülse 15 mit dem Vorspannelement 22 in Figur 4 dargestellt.

Die Hülse 15 weist radial durchstoßende Dehnungsschlitze 33 auf, die mit jeweils 45° Versatz symmetrisch angeordnet sind. Im Querschnitt der Hülse 15 ist die Anordnung der Dehnungsschlitze 33 und des Vorspannelements 22 gezeigt. Die Dehnungsschlitze 33 sind auf beiden Seiten versetzt angeordnet und gehen jeweils über eine Mittelachse 34 hinaus. Diese Anordnung erlaubt eine radiale Aufweitung der Hülse 15. Zentral um die Mittelachse 34 angeordnet liegt das elastomere als Ring ausgebildete Vorspannelement 22 in der Aussparung 21. Bevorzugt weist dabei das radial wirkende elastomere Vorspannelement 22 eine stark progressive Kennlinie auf.

Eine weitere Ausführungsform einer Hülse 115 ist in Figur 5 gezeigt. Ein elastomeres Vorspannelement ist nicht vorgesehen, an Stelle dessen ist eine Aussparung 121 konkav und nicht wie im vorherigen Beispiel rechteckig ausgeformt. Dehnungsschlitze 133 durchstoßen die Hülse 115 radial und sind auf beiden Seiten versetzt angeordnet. Die Dehnungsschlitze 133 gehen dabei nicht über die Mittelachse 34 hinaus. Die radiale Federkennlinie wird hierbei über die Geometrie der Aussparung 121 bestimmt.

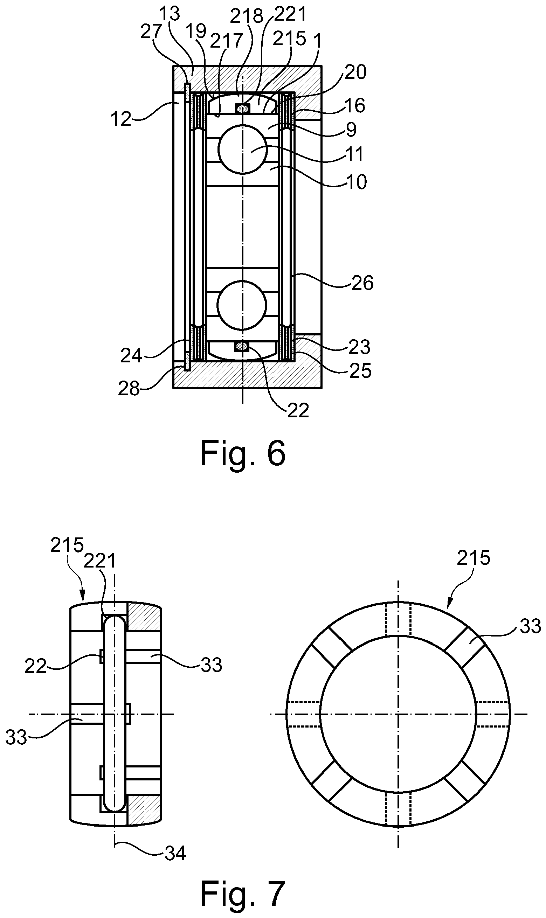

Ein weiteres Ausführungsbeispiel ist in Figur 6 und 7 gezeigt. Hierbei sind gleichen Bauteile wie bereits in den vorherigen Figuren beschrieben mit gleichen Bezugsziffern versehen.

Figur 6 zeigt den Schnitt einer erfindungsgemäßen Lageranordnung. Das hier gezeigte in einer Gehäuseöffnung 12 eines Gehäuses 13 aufgenommene festlagerseitige Wälzlager 1 weist einen Lageraußenring 9 und einen Lagerinnenring 10 und eine Vielzahl von Wälzkörpern 11 auf. Die Gehäuseöffnung 12 ist wie bei den vorherigen erfindungsgemäßen Ausführungsbeispielen zylindrisch um eine hier nicht gezeigte Drehachse eines Schraubritzels ausgeformt, wobei der Radius auf der schraubradgetriebenahen Seite so groß gewählt wurde, dass zwischen dem Lageraußenring 9 des Wälzlagers 1 und dem Gehäuse 13 eine Hülse 215 aufgenommen werden kann. Zur Antriebsseite hin verkleinert sich der Radius der Gehäuseöffnung 12 und bildet eine Gehäuseschulter 16 aus. Im Gegensatz zu den vorherigen beschriebenen Ausführungsbeispielen ist eine innere Anlagefläche 217 der aufgenommenen Hülse 215 zylindrisch und eine äußere Anlagefläche 218 der Hülse 215 ballig ausgeformt. Die Breite der Hülse 215 entspricht in etwa der Breite des Wälzlagers 1. Die Hülse 215 liegt mit der äußeren Anlagefläche 218 an einer Sitzfläche 19 des Gehäuses 13 und mit der inneren Anlagefläche 217 an einer äußeren Umfangsfläche 20 des Lageraußenrings 9 an, wobei die Anlage der balligen Ausformung der Hülse 215 am Lager 1 linienförmig ist. Die zylindrische innere Anlagefläche 217 weist eine rechteckige Aussparung 21 auf, in die ein ringförmiges elastomeres Vorspannelement 22 aufgenommen ist. Auch hier sind zur axialen Lagerbefestigung auf der schraubradgetriebenahen, sowie auf der schraubradgetriebefernen Seite zwischen dem Lageraußenring 9 und der Gehäuseschulter 16 Axialfederelemente 23, 24 vorgesehen. Diese Axialfederelemente 23, 24 bestehen aus Elastomere 25, die jeweils zwischen zwei Ringen 26 angeordnet sind und durch Vulkanisation auf diese aufgebracht wurden. Der Außendurchmesser der Ringe 26 entspricht dabei mit etwas Spiel dem Durchmesser der Gehäuseöffnung 12. Das innenliegende Axialfederelement 23 liegt an der Gehäuseschulter 16 an und das außenliegende Axialfederelement 24 wird von einem in einer Nut 27 im Gehäuse eingebrachten Sicherungsring 28 in seiner Position gehalten.

In der Figur 7 ist das Zusammenspiel von Hülse 215 mit dem Vorspannelement 22 gezeigt. Die Hülse 215 weist radial durchstoßende Dehnungsschlitze 33 auf, die mit jeweils 45° Versatz symmetrisch angeordnet sind. Im Querschnitt der Hülse 215 ist die Anordnung der Dehnungsschlitze 33 und des Vorspannelements 22 gezeigt. Die Dehnungsschlitze 33 sind auf beiden Seiten versetzt angeordnet und gehen jeweils über eine Mittelachse 34 hinaus. Diese Anordnung erlaubt eine radiale Aufweitung der Hülse 215. Zentral um die Mittelachse 34 angeordnet liegt das elastomere Vorspannelement 22 als Ring ausgebildet in der innenliegenden Aussparung 221.

Bei Verwendung einer elastischen Vorspannung des Schraubritzels relativ zum Schraubrad ergibt sich durch das Schwenken des Schraubritzels eine Abweichung der Mittelachsen von Schraubradgetriebe und Wälzlager. Durch die erfindungsgemäße winkelbewegliche Aufnahme des Wälzlagers in einer innen oder außen balligen Gelenkhülse wird diese vollständig bzw. zu einem großen Teil kompensiert. Die auf das Wälzlager wirkende Schwenkung und die daraus resultierenden Momente werden gegenüber einer starren, nicht winkelbeweglichen Anordnung stark reduziert. Bekannte Nachteile, wie erhöhte oder schwankende Reibung, die das Lenkgefühl beeinträchtigt, Geräusche, sowie verringerte Lebensdauer der Lagerung werden beseitigt bzw. minimiert. Weiterhin erlaubt die erfindungsgemäße Lageranordnung die Verwendung von Lagerbauarten mit minimiertem Axialspiel und damit auch Kippspiel wie zum Beispiel Vierpunktlager. Erreicht wird dies durch eine winkelbewegliche Aufnahme des zylindrischen Lageraußenrings in einer innen oder außen balligen Hülse. Der Lageraußenring und die Hülse bilden dadurch ein winkelbewegliches Gelenk. Zum Ausgleich der Durchmessertoleranzen von Lageraußenring, Hülse und Gehäuseöffnung und der durch die Schiefstellung des Lageraußenrings in der Hülse wirkenden effektiven Durchmesservergrößerung besitzt die Hülse eine gewisse radiale Elastizität, die aber auf den zum Ausgleich dieser Toleranzen notwenigen Betrag begrenzt ist. Ansonsten ist diese Hülse radial weitgehend steif und vorteilhafterweise als Kunststoffspritzgussteil ausgeführt.

Weiterhin erfordert die Verkippung des Lagers relativ zur Gehäuseöffnung eine gewisse Nachgiebigkeit der axialen Lagerbefestigung entsprechend der Bewegungsrichtung. Dazu sind auf beiden Seiten des Lagers die Axialfederelemente vorgesehen, die diese Verkippung zulassen.

### Bezugsziffern

- 1: Wälzlager
- 2: Schraubradgetriebe
- 3: Schraubritzel
- 4: Schraubrad
- 5: Loslager
- 6: Vorspanneinrichtung
- 7: Druckfeder
- 8: Verzahnung
- 9: Lageraußenring
- 10: Lagerinnenring
- 11: Wälzkörper
- 12: Gehäuseöffnung
- 13: Gehäuse
- 14: Drehachse
- 15: Hülse
- 16: Gehäuseschulter
- 17: Innere Anlagefläche
- 18: Äußere Anlagefläche
- 19: Sitzfläche
- 20: Äußere Umfangsfläche
- 21: Aussparung
- 22: Vorspannelement
- 23: Axialfederelement
- 24: Axialfelderelement
- 25: Elastomer
- 26: Ringe
- 27: Nut
- 28: Sicherungsring
- 29: Schwenkachse
- 30: Drehachse
- 31: Ausformung
- 32: Nut
- 33: Dehnungschlitze
- 34: Mittelachse
- 115: Hülse
- 121: Aussparung
- 123: Axialfederelement
- 124: Axialfederelement
- 126: Ringe
- 134: Dehnungsschlitze
- 215: Hülse
- 217: Innere Anlagefläche
- 218: Äußere Anlagefläche
- 221: Aussparung
- 21: Aussparung
- 22: Vorspannelement
- 23: Axialfederelement
- 24: Axialfelderelement
- 25: Elastomer
- 26: Ringe
- 27: Nut
- 28: Sicherungsring
- 29: Schwenkachse
- 30: Drehachse
- 31: Ausformung
- 32: Nut
- 33: Dehnungschlitze
- 34: Mittelachse
- 115: Hülse
- 121: Aussparung
- 123: Axialfederelement
- 124: Axialfederelement
- 126: Ringe
- 134: Dehnungsschlitze
- 215: Hülse
- 217: Innere Anlagefläche
- 218: Äußere Anlagefläche
- 221: Aussparung

## Patentansprüche

1. Schraubradgetriebe für eine Lenkung eines Kraftfahrzeugs,
- mit einem Schraubrad (4) und einem in eine Verzahnung (8) des Schraubrades (4) eingreifenden Schraubritzel (3),
- mit einem Festlager (1), welches einen auf einem Lagersitz auf dem Schraubritzel (3) fest angeordneten Lagerinnenring (10) sowie einen Lageraußenring (9) aufweist und welches das Schraubritzel (3) antriebsseitig um eine Längsachse (14) drehbar lagert,
- wobei das Festlager (1) in einem Gehäuse (13) aufgenommen ist,
- das Schraubritzel (3) mit dem Festlager (1) um eine quer zu der Längsachse orientierte Schwenkachse (29) gegenüber dem Gehäuse (13) verschwenkbar ist
- zwischen dem Lageraußenring (9) und dem Gehäuse (13) eine Hülse (15, 115, 215) angeordnet ist, wobei die Hülse (15, 115, 215)
- eine innere Anlagefläche (17, 217) aufweist, die mit einer äußeren Umfangsfläche (20) des Lageraußenrings (9) in Anlage steht, und
- eine äußere Anlagefläche (18, 218) aufweist, die mit einer Sitzfläche (19) des Gehäuses (13) in Anlage steht,
**dadurch gekennzeichnet, dass**
- entweder die innere Anlagefläche (17) oder die äußere Anlagefläche (218) konvex und sowohl die Umfangsfläche (20) zylindrisch oder konvex als auch die Sitzfläche (19) zylindrisch oder konvex ausgebildet sind, wobei
- die konvexe Anlagefläche (17, 218) in linienförmiger Anlage mit der Umfangsfläche (20) oder der Sitzfläche (19) steht, und
- die linienförmige Anlage auf der Mittelebene des Festlagers liegt.

2. Schraubradgetriebe nach Anspruch 1, **dadurch gekennzeichnet, dass**, die Hülse (15, 115, 215) elastisch ist.

3. Schraubradgetriebe nach einem der vorhergehenden Ansprüche, **dadurch gekennzeichnet, dass** die Schwenkachse (29) das Festlager (1) mittig durchsetzt.

4. Schraubradgetriebe nach einem der vorhergehenden Ansprüche, **dadurch gekennzeichnet, dass** das Schraubritzel (3) bei dem Festlager (1) mit dem Antriebsmotor mittels einer elastischen Kupplung verbunden ist.

5. Schraubradgetriebe nach einem der vorhergehenden Ansprüche, **dadurch gekennzeichnet, dass** eine der konvexen Anlagefläche (17, 218) der Hülse (15, 115, 215) gegenüberliegende zylindrische Anlagefläche (18, 217) eine mittige Aussparung (21, 121, 221) aufweist.

6. Schraubradgetriebe nach einem der vorhergehenden Ansprüche, **dadurch gekennzeichnet, dass** die Hülse (15, 115, 215) radial durchsetzende Dehnungsschlitze (33, 133) aufweist.

7. Schraubradgetriebe nach Anspruch 6, **dadurch gekennzeichnet, dass** die Dehnungsschlitze (33) versetzt auf beiden Seiten der Hülse (15, 215) angeordnet sind und über eine Mittelachse (34) hinausgehen.

8. Schraubradgetriebe nach Anspruch 7, **dadurch gekennzeichnet, dass** die Hülse (15, 215) ein ringförmiges Vorspannelement (22) aufweist, das in der Aussparung (21, 221) aufgenommen ist.

9. Schraubradgetriebe nach Anspruch 5, **dadurch gekennzeichnet, dass** die Aussparung (121) konkav ausgeformt ist und die Dehnungsschlitze (133) versetzt auf beiden Seiten der Hülse (115) angeordnet sind.

10. Schraubradgetriebe nach einem der vorhergehenden Ansprüche, **dadurch gekennzeichnet, dass** das Festlager (1) axial durch wenigstens ein Axialfederelement (23, 24, 123, 124) gehalten ist, welches einen lagernahen Ring (26, 126) aufweist.

11. Schraubradgetriebe nach Anspruch 10, **dadurch gekennzeichnet, dass** die jeweils lagernahen Ringe (126) der Axialfederelemente (123, 124) wenigstens eine konvexe Ausformung (31) aufweisen, deren Mitten eine Drehachse (30) definieren, die mit der Schwenkachse (29) des Schraubritzels (3) zusammenfällt.

12. Schraubradgetriebe nach Anspruch 11, **dadurch gekennzeichnet, dass** das Gehäuse (13) innenseitig eine Nut (32) aufweist, in die jeweils eine Orientierungsnase der lagernahen Ringe (126) zur Orientierung der konvexen Ausformung (31) eingreift.

13. Elektrische Hilfskraftlenkung für Kraftfahrzeuge mit einem Schraubradgetriebe (2) nach einem der Ansprüche 1 bis 12.

## Claims

1. Helical gear mechanism for a steering system of a motor vehicle,
- having a helical gear (4) and having a helical pinion (3) which engages into a toothing (8) of the helical gear (4),
- having a fixed bearing (1) which has a bearing inner ring (10) arranged fixedly on a bearing seat on the helical pinion (3) and which has a bearing outer ring (9) and by means of which the helical pinion (3) is mounted, at a drive input side, so as to be rotatable about a longitudinal axis (14),
- wherein the fixed bearing (1) is received in a housing (13),
- the helical pinion (3) together with the fixed bearing (1) is pivotable relative to the housing (13) about a pivot axis (29) oriented perpendicular to the longitudinal axis,
- between the bearing outer ring (9) and the housing (13) there is arranged a sleeve (15, 115, 215), wherein the sleeve (15, 115, 215)
- has an inner contact surface (17, 217) which is in contact with an outer circumferential surface (20) of the bearing outer ring (9), and
- has an outer contact surface (18, 218) which is in contact with a seat surface (19) of the housing (13),
**characterized in that**
- either the inner contact surface (17) or the outer contact surface (218) is of convex form and both the circumferential surface (20) is of cylindrical or convex form and the seat surface (19) is of cylindrical or convex form, wherein
- the convex contact surface (17, 218) is in linear contact with the circumferential surface (20) or with the seat surface (19), and
- the linear contact lies on the central plane of the fixed bearing.

2. Helical gear mechanism according to Claim 1, **characterized in that** the sleeve (15, 115, 215) is elastic.

3. Helical gear mechanism according to one of the preceding claims, **characterized in that** the pivot axis (29) extends centrally through the fixed bearing (1).

4. Helical gear mechanism according to one of the preceding claims, **characterized in that** the helical pinion (3) is, at the fixed bearing (1), connected to the drive motor by means of an elastic coupling.

5. Helical gear mechanism according to one of the preceding claims, **characterized in that** a cylindrical contact surface (18, 217) facing the convex contact surface (17, 218) of the sleeve (15, 115, 215) has a central recess (21, 121, 221).

6. Helical gear mechanism according to one of the preceding claims, **characterized in that** the sleeve (15, 115, 215) has expansion slots (33, 133) extending through it radially.

7. Helical gear mechanism according to Claim 6, **characterized in that** the expansion slots (33) are arranged offset on both sides of the sleeve (15, 215) and extend beyond a central axis (34).

8. Helical gear mechanism according to Claim 7, **characterized in that** the sleeve (15, 215) has an annular preload element (22) which is received in the recess (21, 221).

9. Helical gear mechanism according to Claim 5, **characterized in that** the recess (121) is of concave form, and the expansion slots (133) are arranged offset on both sides of the sleeve (115).

10. Helical gear mechanism according to one of the preceding claims, **characterized in that** the fixed bearing (1) is held axially by at least one axial spring element (23, 24, 123, 124) which has a ring (26, 126) situated close to the bearing.

11. Helical gear mechanism according to Claim 10, **characterized in that** the rings (126), situated in each case close to the bearing, of the axial spring elements (123, 124) have at least one convex protuberance (31), the centers of which protuberances define an axis of rotation (30) which coincides with the pivot axis (29) of the helical pinion (3).

12. Helical gear mechanism according to Claim 11, **characterized in that** the housing (13) has, on the inner side, a groove (32) into which there engages in each case one alignment lug of the rings (126), situated close to the bearing, for alignment of the convex protuberance (31).

13. Electric power steering system for motor vehicles, having a helical gear mechanism (2) according to one of Claims 1 to 12.

## Revendications

1. Transmission à roue hypoïde pour une direction d'un véhicule automobile, comprenant
- une roue hypoïde (4) et un pignon hypoïde (3) s'engageant dans une denture (8) de la roue hypoïde (4),
- un palier fixe (1) qui présente une bague de palier interne (10) disposée fixement sur un siège de palier sur le pignon hypoïde (3) ainsi qu'une bague de palier externe (9) et qui supporte de manière rotative autour d'un axe longitudinal (14) le pignon hypoïde (3) du côté de l'entraînement,
- le palier fixe (1) étant reçu dans un boîtier (13),
- le pignon hypoïde (3) pouvant pivoter avec le palier fixe (1) par rapport au boîtier (13) autour d'un axe de pivotement (29) orienté transversalement à l'axe longitudinal,
- une douille (15, 115, 215) étant disposée entre la bague de palier externe (9) et le boîtier (13), la douille (15, 115, 215) présentant
- une surface d'appui interne (17, 217) qui est en appui contre une surface périphérique externe (20) de la bague de palier externe (9), et
- une surface d'appui externe (18, 218) qui est en appui contre une surface de siège (19) du boîtier (13),
**caractérisée en ce que**
- la surface d'appui interne (17) ou la surface d'appui externe (218) est réalisée sous forme convexe et à la fois la surface périphérique (20) est réalisée sous forme cylindrique ou convexe et la surface de siège (19) est réalisée sous forme cylindrique ou convexe,
- la surface d'appui convexe (17, 218) étant en appui linéaire contre la surface périphérique (20) ou contre la surface de siège (19), et
- l'appui linéaire étant situé sur le plan médian du palier fixe.

2. Transmission à roue hypoïde selon la revendication 1, **caractérisée en ce que** la douille (15, 115, 215) est élastique.

3. Transmission à roue hypoïde selon l'une quelconque des revendications précédentes, **caractérisée en ce que** l'axe de pivotement (29) traverse le palier fixe (1) centralement.

4. Transmission à roue hypoïde selon l'une quelconque des revendications précédentes, **caractérisée en ce que** le pignon hypoïde (3), dans le cas du palier fixe (1), est connecté au moteur d'entraînement au moyen d'un accouplement élastique.

5. Transmission à roue hypoïde selon l'une quelconque des revendications précédentes, **caractérisée en ce qu'**une surface d'appui cylindrique (18, 217) opposée à la surface d'appui convexe (17, 218) de la douille (15, 115, 215) présente un évidement central (21, 121, 221).

6. Transmission à roue hypoïde selon l'une quelconque des revendications précédentes, **caractérisée en ce que** la douille (15, 115, 215) présente des fentes de dilatation continues (33, 133).

7. Transmission à roue hypoïde selon la revendication 6, **caractérisée en ce que** les fentes de dilatation (33) sont disposées de manière décalée des deux côtés de la douille (15, 215) et s'étendent au-delà d'un axe médian (34).

8. Transmission à roue hypoïde selon la revendication 7, **caractérisée en ce que** la douille (15, 215) présente un élément de précontrainte annulaire (22) qui est reçu dans l'évidement (21, 121).

9. Transmission à roue hypoïde selon la revendication 5, **caractérisée en ce que** l'évidement (121) présente une forme concave et les fentes de dilatation (133) sont disposées de manière décalée des deux côtés de la douille (115).

10. Transmission à roue hypoïde selon l'une quelconque des revendications précédentes, **caractérisée en ce que** le palier fixe (1) est retenu axialement par au moins un élément de ressort axial (23, 24, 123, 124), lequel présente une bague proche du palier (26, 126).

11. Transmission à roue hypoïde selon la revendication 10, **caractérisée en ce que** les bagues respectives proches du palier (126) des éléments de ressorts axiaux (123, 104) présentent au moins une formation convexe (31), dont les centres définissent un axe de rotation (30) qui coïncide avec l'axe de pivotement (29) du pignon hypoïde (3).

12. Transmission à roue hypoïde selon la revendication 11, **caractérisée en ce que** le boîtier (13) présente du côté intérieur une rainure (32) dans laquelle s'engage à chaque fois un ergot d'orientation des bagues proches du palier (126) pour l'orientation de la formation convexe (31).

13. Assistance électrique à la direction pour véhicules automobiles comprenant une transmission hypoïde (2) selon l'une quelconque des revendications 1 à 12.
